# EUROPÄISCHE PATENTSCHRIFT

(11) **EP 3 866 561 B1**
(45) Veröffentlichungstag und Bekanntmachung des Hinweises auf die Patenterteilung: **28.02.2024**
(21) Anmeldenummer: 21153204.9
(22) Anmeldetag: 25.01.2021
(51) Int. Cl.: H05B 1/02, H05B 6/06, F24C 7/08

(54) **KOCHFELD UND VERFAHREN ZUM BETRIEB EINES SOLCHEN KOCHFELDS**
HOB AND METHOD FOR OPERATING SAID HOB
PLAQUE DE CUISSON ET PROCÉDÉ DE FONCTIONNEMENT D'UNE TELLE PLAQUE DE CUISSON

(30) Priorität: 17.02.2020 DE 102020201962
(43) Veröffentlichungstag der Anmeldung: 18.08.2021
(73) Patentinhaber: E.G.O. Elektro-Gerätebau GmbH, 75038 Oberderdingen (DE)
(72) Erfinder: Frank, Marcus, 75056 Sulzfeld (DE); Lehner, Marius, 75417 Mühlacker (DE); Wächter, Ulrich, 76646 Bruchsal (DE); Wein, Siegbert, 76703 Kraichtal (DE)
(74) Vertreter: Patentanwälte Ruff, Wilhelm, Beier, Dauster & Partner mbB

(56) Entgegenhaltungen:
- DE-A1-102010 001 002
- DE-T2-602004 004 953
- KR-Y1- 200 464 974

## Beschreibung

Die Erfindung betrifft ein Kochfeld mit einer Kochfeldplatte und Heizeinrichtungen sowie ein Verfahren zum Betrieb eines solchen Kochfelds.

Aus der DE 10 2017 215 895 A1, der DE 10 2012 216 935 A1 und der DE 10 2015 226 052 A1 sind Kochfelder mit einer Wiegefunktion bekannt. Diese Wiegefunktion ist mittels einer Wiegeeinrichtung und Gewichtssensoren realisiert, um entweder ganz normale Wiegevorgänge zu ermöglichen oder aber um automatisierte Kochvorgänge über ein Erfassen des Gewichtsverlusts an verdampftem Wasser besser steuern zu können.

Aus der KR 200464974 Y1 ist ein Kochfeld bekannt mit einer Kochfeldplatte und einem Heizbereich daran, in dem zwei konzentrische Heizeinrichtungen angeordnet sind. Die Heizeinrichtungen sind wiederum in konzentrische Teil-Heizeinrichtungen unterteilt. Kontaktschalter ragen mit Kontaktstiften durch die Kochfeldplatte hindurch nach oben und über diese hinaus. Ein aufgestelltes Kochgefäß drückt die Kontaktstifte abhängig von seiner Größe nach unten und aktiviert so eine entsprechende Anzahl der Heizeinrichtungen. So erfolgt eine größenangepasste Beheizung des Kochgefäßes. An einem Anzeigedisplay können mit fester räumlicher Zuordnung bestimmte Informationen zum Betrieb des Kochfelds angezeigt werden.

Aus der DE 10 2010 001 002 A1 ist ein Kochfeld bekannt mit einer Kochfeldplatte, die einen Heizbereich und einen Anzeigebereich aufweist. Im Heizbereich sind Heizeinrichtungen vorgesehen, um ein darüber aufgestelltes Kochgefäß zu beheizen. Im Anzeigebereich sind definiert vorgegebene Anzeigefelder vorgesehen, an denen eine für den Heizbereich vorgegebene Aufteilung von Heizzonen dargestellt ist. Des Weiteren kann an dem Anzeigebereich Klartext dargestellt werden.

Aus der DE 60 2004 004 953 T2 ist ein weiteres Kochfeld bekannt mit einer Kochfeldplatte und einer Vielzahl von Heizeinrichtungen darunter, die daran einen Heizbereich bilden. An der Kochfeldplatte ist neben dem Heizbereich vorne rechts ein Anzeigebereich vorgesehen, an dem ein Anzeigedisplay angeordnet ist. Hier ist eine matrixartige Anordnung von Leuchtelementen vorgesehen, die einer Aufteilung des Heizbereichs in bestimmte Abschnitte entspricht. Durch Aktivierung jeweiliger Leuchtelemente kann an dem Anzeigedisplay dargestellt werden, wo im Heizbereich ein aufgestelltes Kochgefäß erkannt worden ist.

### Aufgabe und Lösung

Der Erfindung liegt die Aufgabe zugrunde, ein eingangs genanntes Kochfeld sowie ein eingangs genanntes Verfahren zu dessen Betrieb zu schaffen, mit denen Probleme des Standes der Technik gelöst werden können und es insbesondere möglich ist, ein Kochfeld besonders bedienerfreundlich auszugestalten bzw. betreiben zu können, vorzugsweise um mehr Informationen an eine Bedienperson anzeigen zu können.

Gelöst wird diese Aufgabe durch ein Kochfeld mit den Merkmalen des Anspruchs 1 sowie ein Verfahren zu dessen Betrieb mit den Merkmalen des Anspruchs 6. Vorteilhafte sowie bevorzugte Ausgestaltungen der Erfindung sind Gegenstand der weiteren Ansprüche und werden im Folgenden näher erläutert. Dabei werden manche der Merkmale nur für das Kochfeld oder nur für das Verfahren zu dessen Betrieb beschrieben. Sie sollen jedoch unabhängig davon sowohl für das Kochfeld als auch für das Verfahren selbständig und unabhängig voneinander gelten können. Der Wortlaut der Ansprüche wird durch ausdrückliche Bezugnahme zum Inhalt der Beschreibung gemacht.

Das Kochfeld weist eine Kochfeldplatte auf, vorteilhaft wie üblich aus Glas bzw. Glaskeramik, mit einem Heizbereich und einem Anzeigebereich. Die beiden Bereiche können an einer einzigen durchgängigen Kochfeldplatte vorgesehen sein, unter Umständen auch separat. Im Heizbereich sind Heizeinrichtungen vorgesehen, wodurch sich der Heizbereich auch definiert. Vorteilhaft ist dies eine Vielzahl von Heizeinrichtungen, beispielsweise 4 bis 12. Im Anzeigebereich ist ein Anzeigedisplay vorgesehen, insbesondere ein einziges Anzeigedisplay, vorteilhaft ein sogenanntes Touch-Display. Dieses Anzeigedisplay ist dazu ausgebildet, zumindest Kochgefäßsymbole und Informationen mit Buchstaben und/oder Zahlen an beliebiger bzw. wählbarer Position daran anzuzeigen. Vorteilhaft ist das Anzeigedisplay ein frei ansteuerbares Display mit einer Anzahl von mindestens 100 x 200 Bildpunkten, besonders vorteilhaft mindestens 200 x 400 Bildpunkten. Seine Größe kann zwischen 20 cm² und 300 cm² liegen. Es ist eine Steuereinrichtung vorgesehen, insbesondere mit einem Mikrocontroller, sowie eine Kochgefäßerkennungseinrichtung. Die Kochgefäßerkennungseinrichtung ist auf bekannte Art dazu ausgebildet, ein mit dem Kochfeld bzw. dessen Heizeinrichtungen beheizbares Kochgefäß und dessen Position auf der Kochfeldplatte im Heizbereich zu erkennen. Hierfür können spezielle Kochgefäßerkennungssensoren vorgesehen sein, wie sie aus dem Stand der Technik bekannt sind, siehe beispielsweise die EP 3 079 443 A1. Vorteilhaft sind die Heizeinrichtungen induktive Heizeinrichtungen, insbesondere Induktionsheizspulen, und das Kochgefäß ist entsprechend ausgebildet, um induktiv beheizt werden zu können, also zumindest teilweise ferromagnetisch. Dies kann mit den genannten Kochgefäßerkennungssensoren oder mittels einer entsprechenden Funktion der Induktionsheizeinrichtungen selbst erfolgen.

Des Weiteren ist eine Wiegeeinrichtung mit Gewichtssensoren am Kochfeld vorgesehen, die dazu ausgebildet ist, eine Gewichtsveränderung an und auf der Kochfeldplatte zu erkennen und zu messen. Eine solche Wiegeeinrichtung ist vorteilhaft ausgebildet wie eingangs im Stand der Technik genannt.

Erfindungsgemäß ist die Steuereinrichtung dazu ausgebildet, ein mit dem Kochfeld beheizbares Kochgefäß auf der Kochfeldplatte im Heizbereich zu erkennen, ggf. mit der Hilfe der Kochgefäßerkennungseinrichtung, und zusätzlich an einer der Position im Heizbereich entsprechenden Position an dem Anzeigedisplay anzuzeigen. Dazu weist das Anzeigedisplay vorzugsweise dieselbe geometrische Grundform auf wie die Kochfeldplatte bzw. zumindest die Außenumrisse des Heizbereichs, vorteilhaft rechteckig. Insbesondere sind die Längenverhältnisse ähnlich oder gleich. Die erkannte Relativposition des Kochgefäßes auf der Kochfeldplatte im Heizbereich wird entsprechend als Relativposition am Anzeigedisplay angezeigt. Ist ein Kochgefäß hinten links im Heizbereich, so erfolgt seine Anzeige an dem Anzeigedisplay auch hinten links, und so weiter.

Des Weiteren sind die Wiegeeinrichtung und die Steuereinrichtung dazu ausgebildet, eine Position der Gewichtsveränderung bzw. eines die Gewichtsveränderung hervorrufenden Gegenstands auf der Kochfeldplatte, insbesondere im Heizbereich, zu erkennen. Dies kann quasi mit einer vorgenannten Kochgefäßerkennungseinrichtung erfolgen, wenn es sich bei dem Gegenstand um einen ferromagnetischen Gegenstand handelt im vorbeschriebenen Beispiel, der induktiv beheizt werden kann. Alternativ kann mit der Wiegeeinrichtung und durch Auswertung von deren Signalen mittels der Steuereinrichtung die gesamte Gewichtsveränderung am Kochfeld quantitativ erfasst werden. Des Weiteren kann die Gewichtsveränderung bzw. ein aufgestelltes Gewicht, wie im Übrigen im eingangs genannten Stand der Technik auch beschrieben ist, auch lokalisiert werden bzw. die Position kann auf der Kochfeldplatte erkannt werden. Diese Gewichtsveränderung wird dann an der entsprechenden Position an dem Anzeigedisplay als Gewichtsangabe angezeigt, beispielsweise als "2.250 g".

Erfindungsgemäß ist die Steuereinrichtung dazu ausgebildet, in zwei unterschiedlichen Fällen Unterschiedliches zu veranlassen bzw. unterschiedliche Schritte zu bewirken. In einem ersten Fall, bei dem an der Position einer erkannten Gewichtsveränderung ein mit dem Kochfeld beheizbares Kochgefäß erkannt worden ist, bewirkt die Steuereinrichtung, dass an einer Position am Anzeigedisplay, die der Position der Gewichtsveränderung im Heizbereich entspricht, ein Kochgefäß bzw. ein Kochgefäßsymbol angezeigt wird. Die Anzeige der Gewichtsangabe wird dann der Anzeige des Kochgefäßsymbols am Anzeigedisplay räumlich zugeordnet, so dass eine Bedienperson die Gewichtsangabe problemlos dem angezeigten Kochgefäß bzw. dessen Kochgefäßsymbol zuordnen kann. Eine räumliche Zuordnung kann insbesondere derart sein, dass die Gewichtsangabe innerhalb eines flächigen Kochgefäßsymbols für das beheizbare Kochgefäß dargestellt wird, alternativ mit einem Abstand von weniger als 2 cm oder sogar weniger als 1 cm daneben angezeigt wird. Eine Anzeige daneben kann auch stets in derselben Relation vorgesehen sein, beispielsweise immer mittig dahinter oder rechts daneben.

In einem zweiten Fall, bei dem an der Position einer erkannten Gewichtsveränderung kein mit dem Kochfeld beheizbares Kochgefäß erkannt worden ist, wird kein Kochgefäß bzw. kein Kochgefäßsymbol angezeigt. Dafür wird an einer Position am Anzeigedisplay, die der Position der Gewichtsveränderung im Heizbereich entspricht, nur das Gewicht bzw. die Gewichtsangabe selber angezeigt. Vorteilhaft erfolgt dies als Zahl, vorzugsweise noch mit einer Maßeinheit, insbesondere Gramm, beispielsweise nur als vorgenannte "2.250 g". Zusätzlich oder alternativ kann ein Symbol angezeigt werden, welches helfen kann, die Position am Anzeigedisplay und somit die Verbindung zu der entsprechenden Position am Heizbereich besser erkennen zu können, so dass eine Art Gewichtssymbol oder Gegenstandssymbol angezeigt werden kann. Ein solches Gewichtssymbol oder Gegenstandssymbol unterscheidet sich vorteilhaft von einem vorgenannten Kochgefäßsymbol.

Somit ist es möglich, dass am Anzeigedisplay des Kochfelds eine Gewichtsveränderung bzw. ein aufgestelltes Gewicht, das zuvor erkannt und gemessen worden ist, angezeigt wird, insbesondere als Symbol. Kann die Kochgefäßerkennungseinrichtung ein mit dem Kochfeld beheizbares Kochgefäß an derselben Position im Heizbereich erfassen wie die Wiegeeinrichtung eine Gewichtsveränderung bzw. ein Gewicht, also einen Gegenstand, erfasst, so zieht die Steuereinrichtung daraus den Schluss, dass die Gewichtsveränderung von diesem Kochgefäß stammt. Die erfasste Gewichtsveränderung bzw. das Gewicht, also der Gegenstand, sind ein Kochgefäß Dann werden die beiden sozusagen gemeinsam dargestellt als Anzeige eines Kochgefäßes mit einem bestimmten Gewicht. Anderenfalls wird eben nur die Gewichtsangabe dargestellt, ggf. mit einem Gewichtssymbol. Dies kann für eine Bedienperson auch nützlich sein, beispielsweise weil sie weiß, dass ein nicht beheizbares Keramik-Gefäß oder Kunststoff-Gefäß aufgestellt worden ist, dessen Gewicht als reine Wiegefunktion ohne Heizfunktion erfasst werden soll. Damit können auch an einem Kochfeld mit einem relativ großen Anzeigedisplay, das separat vom Heizbereich ist und als sehr funktionales Anzeigedisplay mit vielen Anzeigemöglichkeiten ausgebildet sein kann, Informationen gut und auf neuartige Art und Weise verknüpft werden.

Wie zuvor angedeutet worden ist, sind die Heizeinrichtungen im Heizbereich des Kochfelds vorteilhaft Induktionsheizeinrichtungen, insbesondere sogenannte Induktionsheizspulen. Sie können beliebige Form aufweisen, üblicherweise sind sie rund und vorzugsweise rechteckig, ggf. mit abgerundeten Außenecken. Die Heizeinrichtungen können benachbart zueinander angeordnet sein und weniger als 3 cm Abstand zueinander aufweisen, beispielsweise 0,5 cm bis 2 cm. Die Induktionsheizeinrichtungen können mindestens 80 % der Fläche des Heizbereichs bedecken, vorteilhaft mindestens 90 %. Somit kann ein mit diesen Heizeinrichtungen induktiv beheizbares Kochgefäß an weitgehend beliebiger bzw. frei wählbarer Position bzw. Stelle auf dem Heizbereich aufgestellt werden, seine Position erkannt werden und dann kann es induktiv beheizt werden. Derartige Flächenkochfelder sind aus dem Stand der Technik bekannt, siehe beispielsweise die DE 10 2014 224 051 A1. Deswegen ist hier auch die Anzeige einer erkannten Position eines solchen Kochgefäßes am Anzeigedisplay sehr vorteilhaft, was dann auch für eine erkannte Gewichtsangabe gelten soll.

Vorteilhaft ist, wie eingangs angedeutet worden ist, der Anzeigebereich innerhalb derselben Kochfeldplatte gebildet wie der Heizbereich. Die Kochfeldplatte weist eine durchgehende Fläche über dem Heizbereich und dem Anzeigebereich auf. Dabei ist vorteilhaft das Anzeigedisplay im Anzeigebereich unterhalb der Kochfeldplatte angeordnet, vorzugsweise von unten angedrückt. Dann kann eine rechteckige Kochfeldplatte verwendet werden, und in einem vorderen Bereich, insbesondere an eine Vorderkante der Kochfeldplatte angrenzend, ist der Anzeigebereich vorgesehen, insbesondere mittig zwischen links und rechts. Dieser ist ebenfalls rechteckig, vorteilhaft mit demselben Verhältnis der Seitenlängen zueinander wie die Kochfeldplatte. Alternativ kann ein Ausschnitt in der Kochfeldplatte für das Anzeigedisplay vorgesehen sein, welches dann eine eigene Oberseite und Oberfläche aufweist getrennt von der Kochfeldplatte. Dann ist allerdings der Aufwand für das Herstellen eines Ausschnitts in der Kochfeldplatte zu beachten. Andererseits kann dann das Anzeigedisplay mit einer anderen Oberfläche oder Abdeckung als die Kochfeldplatte selbst vorgesehen sein. Da Kochfeldplatten vorteilhaft aus Glaskeramik mit dunkler rötlich-brauner Färbung bestehen, kann für das Anzeigedisplay eine Glasscheibe vorgesehen sein, insbesondere transparent, vorteilhaft als Hartglasscheibe. So kann ein Anzeigedisplay viel besser erkennbar sein für eine ansprechende optische Darstellung bzw. Anzeige. Auch in diesem Fall ist das Längen-Seiten-Verhältnis der Kochfeldplatte entsprechend desjenigen des Anzeigedisplays.

In vorteilhafter Ausgestaltung der Erfindung kann das Anzeigedisplay als ein TFT-Anzeigedisplay ausgebildet sein. Dann kann eine eingeführte und beherrschte Technologie verwendet werden. Ein Anzeigedisplay kann beispielsweise als LED-Anzeigedisplay oder als OLED-Anzeigedisplay ausgebildet sein, so dass es eine starke Leuchtkraft hat für ein optisch ansprechendes Äußeres. So kann gegebenenfalls auch eine vorgenannte rötlich-braune Glaskeramikplatte als Kochfeldplatte durchstrahlt werden.

In vorteilhafter Ausgestaltung der Erfindung kann die Wiegeeinrichtung mindestens drei Gewichtssensoren aufweisen, vorzugsweise vier Gewichtssensoren. Gewichtssensoren sollten im Außenbereich der Kochfeldplatte angeordnet sein, und zwar nahe an einer Außenkante des Kochfelds bzw. der Kochfeldplatte. Vorteilhaft ist ein Gewichtssensor in einem Eckbereich angeordnet. Besonders vorteilhaft sind die Gewichtssensoren in Eckbereichen der Kochfeldplatte angeordnet, beispielsweise bei vier Gewichtssensoren in jedem Eckbereich einer. Aus der insgesamt gemessenen Gewichtsbelastung bzw. Gewichtsveränderung kann die Masse der Gewichtsveränderung bzw. eines aufgestellten Gegenstands oder Kochgefäßes erfasst werden. Durch Vergleich der Messwerte der einzelnen Gewichtssensoren untereinander kann dann der Ort der Gewichtsveränderung relativ genau bestimmt werden. Dies ist aus dem Stand der Technik an sich auch bekannt, siehe beispielsweise die US 5,183,996 oder die DE 100 62 372 A1.

In Ausgestaltung der Erfindung ist es möglich, dass eine Erkennung von Kochgefäßen auf der Kochfeldplatte bzw. im Heizbereich in regelmäßigen zeitlichen Abständen erfolgt. Dies kann bei einem eingeschalteten Kochfeld zeitlich durchgehend sein, also sozusagen immer wieder. Ein zeitlicher Abstand zwischen Erkennungen kann maximal 5 sec betragen, vorzugsweise maximal 2 sec. Bei einer separaten Kochgefäßerkennung mittels zusätzlicher Sensoren kann dies in diesem zeitlichen Rahmen erfolgen. Bei einer Erkennung eines mit einer Heizeinrichtung beheizbaren Kochgefäßes, insbesondere wenn es Induktionsheizeinrichtungen sind, erfolgt dies sozusagen auf bekannte Art und Weise während des Betriebs der Induktionsheizeinrichtung selbst. Dies gilt zumindest für das Abnehmen von Kochgefäßen von der Kochfeldplatte. Des Weiteren können die Induktionsheizeinrichtungen mit sogenannten Pings in einem ähnlichen zeitlichen Abstand wie vorgenannt versuchen zu erfassen, ob ein Kochgefäß auf ihnen oder über ihnen aufgestellt ist, das induktiv beheizbar ist.

In einer Weiterbildung der Erfindung kann vorgesehen sein, dass in dem Fall, dass einer Anzeige eines Kochgefäßes, was vorteilhaft als Kochgefäßsymbol erfolgen kann, am Anzeigedisplay eine Gewichtsangabe zugeordnet worden ist, diese Gewichtsangabe auch zugeordnet bleibt und dargestellt bleibt, solange das Kochgefäß am Anzeigedisplay angezeigt wird. Wird das Kochgefäß von einer ersten Position im Heizbereich auf eine zweite Position im Heizbereich verschoben, beispielsweise um 10 cm bis 50 cm, so wird das Kochgefäßsymbol am Anzeigedisplay sozusagen entsprechend mitverschoben bzw. zumindest an der zweiten Position, wenn es wieder still steht, dargestellt. Für diese Anzeige bzw. Darstellung dient das genannte Kochgefäßsymbol. Die Gewichtsangabe wird dann auch in der zweiten Position auf die gleiche Art und Weise mit dem Kochgefäßsymbol verknüpft dargestellt wie an der ersten Position, beispielsweise davor, dahinter, daneben oder darin. Sollte auf einmal von der Wiegeeinrichtung eine Gewichtsveränderung festgestellt werden, also dass sich das Gewicht des Kochgefäßes verändert hat, so wird das neu gemessene bzw. zuletzt gemessene Gewicht angezeigt. Dies erfolgt vorteilhaft sofort sobald die Steuereinrichtung ausreichend genau die Gewichtsveränderung festgestellt hat.

Allgemein kann vorgesehen sein, dass eine Anzeige einer Gewichtsangabe sozusagen stets aktuell gehalten wird. Selbst wenn sich das Kochgefäß oder auch ein anderer Gegenstand in seiner Position nicht verändert, aber die Wiegeeinrichtung zusammen mit der Steuereinrichtung erfasst, dass das Gewicht dieses Kochgefäßes oder Gegenstands geringer wird oder ansteigt, wird die aktuell gemessene Gewichtsangabe angezeigt. So kann beispielsweise das Entnehmen von Gargut oder Hinzufügen von Gargut angezeigt werden.

In weiterer Ausgestaltung der Erfindung kann vorgesehen sein, dass bei einer Anzeige eines auf der Kochfeldplatte erkannten Kochgefäßes am Anzeigedisplay unabhängig von einer Gewichtsangabe oder zusätzlich dazu eine für dieses Kochgefäß gewählte Leistungsstufe der Anzeige dieses Kochgefäßes am Anzeigedisplay zugeordnet angezeigt wird, also dem Kochgefäßsymbol. Die Leistungsstufe kann beispielsweise innerhalb der Anzeige des Kochgefäßes oder mit einem Abstand von maximal 2 cm benachbart daneben angezeigt werden, beispielsweise ähnlich wie zuvor für die Gewichtsangabe beschrieben. Allerdings sollte die Leistungsstufe an einer anderen Position stehen und sich nicht mit der Gewichtsangabe überdecken. Vorteilhaft werden einer Bedienperson die Leistungsstufe und eine Gewichtsangabe gleichzeitig angezeigt, da in der Regel die Leistungsstufe die wichtigere Information ist. Es kann vorgesehen sein, dass eine Leistungsstufe innerhalb eines Kochgefäßsymbols angezeigt wird und die Gewichtsangabe, wie zuvor erläutert, davor oder daneben. Auch hier kann vorgesehen sein, dass die Leistungsstufe mit größerer Anzeige bzw. größeren Ziffern als die Gewichtsangabe angezeigt wird.

In vorteilhafter Ausgestaltung der Erfindung wird ein Kochgefäßsymbol mit einer Größe dargestellt, die einer erkannten Größe des Kochgefäßes entspricht. Besonders vorteilhaft entspricht dies von den Relationen her auch dem Verhältnis zur Größe des Anzeigedisplays. So können Konflikte vermieden werden, wenn auf dem Heizbereich mehrere Gegenstände oder Kochgefäße sehr nahe beieinander oder sich berührend vorhanden sind, und sich deren Anzeigen am Anzeigedisplay zwar berühren können, aber nicht überschneiden sollten.

In Ausgestaltung der Erfindung kann ein im Heizbereich erkanntes Kochgefäß an dem Anzeigedisplay durch ein rundes Kochgefäßsymbol angezeigt werden. Vorteilhaft ist ein solches Kochgefäßsymbol kreisrund, da dies auch für die meisten Kochgefäße zutrifft. Es kann sogar vorgesehen sein, dass in dem Fall, dass eine Kochgefäßerkennungseinrichtung eine unrunde Form des Kochgefäßes feststellt, beispielsweise eine länglich-ovale Form eines sogenannten Bräters, auch das Kochgefäß mit einer entsprechenden Form und mit proportional passender Größe als entsprechendes Kochgefäßsymbol dargestellt wird.

Eine Gewichtsveränderung oder ein auf den Heizbereich aufgesetzter Gegenstand, der nicht mit dem Kochfeld beheizt werden kann, beispielsweise weil er nicht induktiv beheizt werden kann, soll an seiner Position am Anzeigedisplay auch angezeigt werden. Hierfür kann vorzugsweise ein vorgenanntes rechteckiges rahmenförmiges Symbol verwendet werden. Hier kann eine Gewichtsangabe beispielsweise innerhalb dieses rahmenförmigen Symbols angezeigt werden, da eine sonst an dieser Stelle angezeigte Leistungsstufe hier ja nicht vorgesehen sein kann. Alternativ kann eine Gewichtsangabe an derselben Stelle angezeigt werden wie an einem beheizbaren Kochgefäß bzw. an dessen Kochgefäßsymbol.

Es kann dauerhaft bzw. permanent überwacht werden, ob eine Gewichtsveränderung an der Kochfeldplatte vorliegt bzw. erkannt worden ist. Eine erkannte Gewichtsveränderung wird dann einem an dieser Position erkannten Kochgefäß anhand seiner Koordinaten zugeordnet. Dabei wird die Gewichtsangabe dieses Kochgefäßes eben entsprechend erhöht oder verringert, und zwar vorteilhaft sobald eine Gewichtsveränderung erkannt worden ist.

In weiterer Ausbildung der Erfindung kann vorgesehen sein, dass an einer Position einer erkannten Gewichtsveränderung, an der kein mit dem Kochfeld beheizbares Kochgefäß erkannt worden ist, eine Signalisierung an eine Bedienperson erfolgt. Eine solche Signalisierung kann optisch und/oder akustisch erfolgen, so dass eine Bedienperson auf alle Fälle darauf aufmerksam gemacht wird, dass an dieser Position nur eine Gewichtsveränderung erfasst wird bzw. ein aufgestellter Gegenstand gewogen worden ist. Eine Beheizung, falls sie überhaupt beabsichtigt sein sollte, ist an dieser Position dann aber nicht möglich.

Mit der Erfindung ist es beispielsweise auch möglich, dass eine Bedienperson das Kochfeld als eine Art Küchenwaage nutzt ohne jegliche Heizfunktion. Hierfür kann nach Einschalten des Kochfelds oder bei eingeschaltetem Kochfeld entweder eine spezielle Wiegefunktion aktiviert werden, beispielsweise mit einem speziellen Bedienelement. Danach kann ein zu wiegender Gegenstand an beliebiger bzw. frei wählbarer Position auf den Heizbereich des Kochfelds aufgestellt werden und sein Gewicht gemessen werden. Dieses wird dann als Gewichtsangabe zusammen mit der Position am Anzeigedisplay dargestellt. Des Weiteren sind vorteilhaft Möglichkeiten vorgesehen, wie sie von einer Küchenwaage bekannt sind, beispielsweise eine Art Tarierfunktion, um das Gewicht beispielsweise einer Rührschüssel selbst sozusagen zu beseitigen, so dass nur das Gewicht von darin eingefülltem Gargut oder Sonstigem erfasst wird. Hat eine Bedienperson eine solche Möglichkeit einer Tarierfunktion für ein Gefäß oder allgemein einen Gegenstand ausgewählt, das kein mit dem Kochfeld beheizbares Kochgefäß ist, was beispielsweise mit einem speziellen Bedienelement erfolgen kann, wird die Position des Gefäßes auf der Kochfeldplatte erkannt, das tariert werden soll. In einem vorausgehenden Schritt erfolgt ein Tarieren der Wiegeeinrichtung derart, dass an dem Anzeigedisplay die Gewichtsangabe für dieses Gefäß auf Null gesetzt wird als Tarieren, insbesondere die Gewichtsangabe "0" angezeigt wird. Schließlich hat die Wiegeeinrichtung für dieses erkannte Gefäß bereits ein Gewicht festgestellt und dann als Gewichtsangabe angezeigt am Anzeigedisplay. Vorzugsweise bleibt für die anderen Kochgefäßen die Anzeige ihrer Gewichtsangabe erhalten und unverändert, diese sollen nämlich nicht tariert werden. In einem nachfolgenden Schritt wird nach dem Tarieren eine Gewichtsveränderung bei dem tarierten Gefäß aktualisiert entsprechend der erkannten Gewichtsveränderung. Somit wird nur die Gewichtsveränderung für das Gefäß angezeigt, und nicht das erkannte Gewicht des Gefäßes selbst. Damit kann vorteilhaft das Abfüllen von Gargut odgl. sowie auch allgemeines Wiegen von Gegenständen in einem Gefäß erfolgen.

### Kurzbeschreibung der Zeichnungen

Ausführungsbeispiele der Erfindung sind in den Zeichnungen schematisch dargestellt und werden im Folgenden näher erläutert. In den Zeichnungen zeigen:
- Fig. 1: eine Draufsicht auf ein erfindungsgemäßes Kochfeld mit Induktionsheizspulen in einem Heizbereich und mit einem Anzeigedisplay in einem Anzeigebereich, wobei zwei induktiv beheizbare Kochgefäße und ein Behälter aus Kunststoff aufgestellt sind,
- Fig. 2: eine vergrößerte Darstellung des Anzeigedisplays des Kochfelds aus Fig. 1 mit der entsprechenden Anzeige und
- Fig. 3: das Anzeigedisplay entsprechend Fig. 2, bei dem ein Kochgefäß verschoben worden ist und der Behälter durch ein induktiv beheizbares Kochgefäß ersetzt worden ist.

### Detaillierte Beschreibung der Ausführungsbeispiele

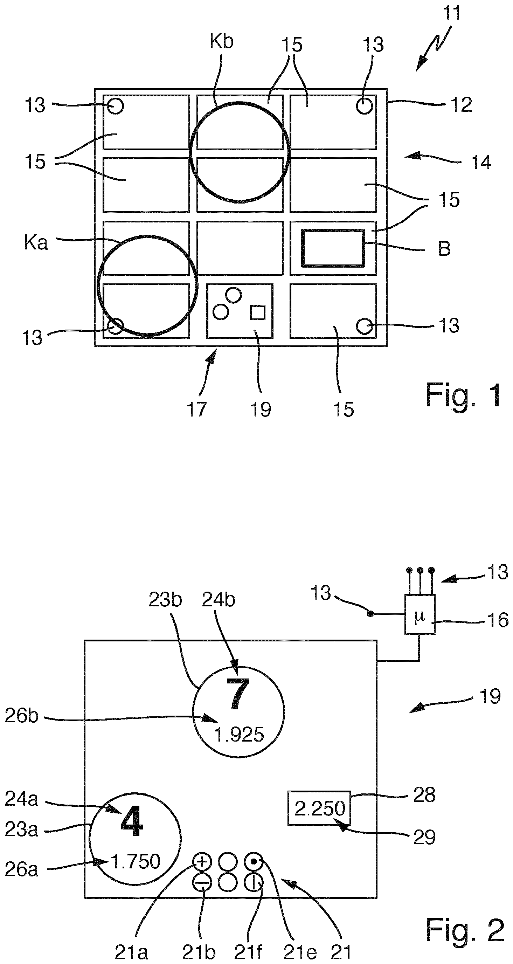

In der Fig. 1 ist eine Draufsicht auf ein vereinfacht dargestelltes Kochgefäß 11 zu sehen. Das Kochfeld 11 weist eine Kochfeldplatte 12 auf, vorteilhaft aus Glaskeramik, die rechteckige Form aufweist, hier mit einem Längen:Breiten-Verhältnis von 6:7. Die Kochfeldplatte 12 ist durchgängig ausgebildet.

In den vier Eckbereichen der Kochfeldplatte 12 sind Gewichtssensoren 13 vorgesehen, und zwar in jedem Eckbereich ein Gewichtssensor 13. Für die genaue konstruktive Ausgestaltung der Gewichtssensoren 13 sowie deren Anordnung wird beispielsweise auf die vorgenannte US 5,183,996, die DE 100 62 372 A1 oder die DE 10 2017 215 895 A1 verwiesen. Durch die Anordnung der Gewichtssensoren 13 in den Eckbereichen kann eine gesamte Gewichtsbelastung und somit auch durch den zeitlichen Kontext eine Gewichtsveränderung auf der Kochfeldplatte 12 festgestellt werden. Des Weiteren kann durch Vergleich untereinander, also von den Messwerten der Gewichtssensoren 13, relativ genau lokalisiert werden, wo eine Gewichtsveränderung stattfindet. Dabei können Gewichtsveränderungen auch dahingehend in ihrem zeitlichen Kontext unterschieden werden, ob eine Gewichtsveränderung in erheblichem Maß schlagartig erfolgt, beispielsweise wenn ein Kochgefäß aufgestellt und abgenommen wird, oder ob eine Gewichtsveränderung langsam erfolgt, beispielsweise weil Wasser aus einem Kochgefäß langsam verdunstet und dieses leichter wird. Dies ist aber leicht vorstellbar und kann dem genannten Stand der Technik entnommen werden. Die Gewichtssensoren 13 sind dazu mit einer Steuereinrichtung 16 für das Kochfeld 11 verbunden. Sie bilden somit eine eingangs genannte Wiegeeinrichtung, selbst wenn diese teilweise im gleichen Mikrocontroller wie die Funktionen der Steuereinrichtung 16 an sich realisiert ist.

Das Kochfeld 11 weist einen Heizbereich 14 auf, in dem 11 angenähert rechteckige Induktionsheizspulen 15 angeordnet sind. Die Induktionsheizspulen 15 sind sämtlich gleich groß, insbesondere identisch. Der Heizbereich 14 ist also überall dort, wo diese Induktionsheizspulen 15 angeordnet sind. Lediglich am vorderen Rand mittig ist sozusagen eine Position einer Induktionsheizspule ausgespart, hier befindet sich der Anzeigebereich 17, in dem ein Anzeigedisplay 19 angeordnet ist. Der Anzeigebereich 17 wird also flächenmäßig durch das Anzeigedisplay 19 bestimmt.

Alternativ zu einer durchgehenden Kochfeldplatte 12 könnte diese auch einen Ausschnitt aufweisen, der von der Größe her dem Anzeigebereich 17 entspricht. Dort könnte die Oberseite dann von dem Anzeigedisplay 19 selbst oder zumindest von einer dieses überdeckenden, vorteilhaft durchsichtigen Glasscheibe gebildet sein. Wichtig ist im Rahmen der Erfindung also die Unterteilung zwischen Heizbereich 14 einerseits und Anzeigebereich 17 andererseits. Die Frage, ob eine durchgehende Oberseite vorhanden ist oder nicht, spielt bzgl. der Erfindung eine untergeordnete Rolle.

Auf der Kochfeldplatte 12 ist im Heizbereich 14 vorne links ein erstes Kochgefäß Ka aufgestellt, hier in runder Form. Das Kochgefäß Ka überdeckt im Wesentlichen die beiden vorderen linken Induktionsheizspulen 15 und soll von diesen beiden beheizt werden. Das Kochgefäß Ka ist auch für eine induktive Beheizung ausgelegt, weswegen es nicht nur von einer hier nicht dargestellten Kochgefäßerkennung erkannt worden ist, beispielsweise mittels zusätzlicher Sensoren, sondern im Betrieb der Induktionsheizspulen 15 auch durch diese selbst erkannt werden kann.

In der Mitte hinten ist im Heizbereich 14 ein zweites Kochgefäß Kb aufgestellt, und zwar mit derselben Größe und Form wie das vorbeschriebene erste Kochgefäß Ka. Es überdeckt die beiden hinteren mittleren Induktionsheizspulen 15 und wird von diesen beheizt, da es ebenfalls für eine induktive Beheizung ausgelegt ist. Es ist ebenfalls erkannt worden wie das erste Kochgefäß Ka.

Vorne rechts ist ein rechteckig dargestellter Behälter B auf die Kochfeldplatte 12 im Heizbereich 14 aufgestellt. Er ist quasi mittig über einer einzigen Induktionsheizspule 15 aufgestellt. Der Behälter B besteht aber aus Kunststoff und kann somit von einer vorbeschriebenen Kochgefäßerkennung und vor allem von den Induktionsheizspulen 15 nicht erkannt werden. Sein Vorhandensein sowie seine Position können aber über die Gewichtssensoren 13 bzw. die genannte Wiegeeinrichtung erkannt werden. Die Form des Behälters B kann natürlich nicht erkannt werden, sie ist hier rechteckig dargestellt, weil der Behälter B in Realität eben rechteckig ist.

Die Gewichtssensoren 13 sind hier sozusagen innerhalb der Fläche der in den Eckbereichen angeordneten Induktionsheizspulen 15 vorgesehen. Dies muss aber nicht so sein, vorteilhaft sind die Gewichtssensoren 13 ohnehin in einer Ebene unterhalb der Induktionsheizspulen 15 angeordnet. Sie könnten aber auch noch weiter in den Ecken angeordnet sein.

In der Fig. 2 ist das Anzeigedisplay 17 in Vergrößerung dargestellt, wie es vereinfacht auch bereits aus Fig. 1 zu ersehen ist. Das Anzeigedisplay 19 ist als TFT-Display ausgebildet und weist eine integrierte Touch-Funktion auf, ist also gleichzeitig ein Touch-Screen. Derartige Touch-Screens sind allgemein bekannt. So können zum einen sechs Bedienelemente 21 vorne in der Mitte bereitgestellt werden sowie deren Bedienung durch Auflegen eines Fingers erkannt werden. Dies sind links ein Plus-Bedienelement 21a und ein Minus-Bedienelement 21b, mit denen eine Leistungseinstellung oder eine Timer-Eingabe möglich ist. In der Mitte sind zwei nicht näher bezeichnete Bedienelemente vorgesehen. Rechts hinten ist ein Gewichtsmess-Bedienelement 21e vorgesehen und rechts vorne ein Ein-/Aus-Schalter 21f für das gesamte Kochfeld 11. Weitere Bedienelemente könnten natürlich problemlos vorgesehen sein. Des Weiteren kann aufgrund der Eigenschaft als Touch-Screen vorgesehen sein, dass durch eine Berührung an einer Stelle oberhalb eines dargestellten Kochgefäßsymbols 23a oder 23b dieses samt seiner Kochzone bzw. der diese Kochzone bildenden Induktionsheizspulen 15 selektiert werden, um dann mittels der Bedienelemente 21a und 21b die Leistung zu verstellen. Dies ist aber grundsätzlich aus dem Stand der Technik bekannt und braucht hier nicht näher erläutert zu werden.

Bei Betrachtung der beiden Kochgefäßsymbole 23a und 23b sowie des Behältersymbols 28 gemäß Fig. 2 fällt auf, dass deren Anordnung innerhalb der Fläche des Anzeigedisplays 19 relativ genau deren Anordnung auf der Kochfeldplatte 12 im Heizbereich 14 entsprechend Fig. 1 entspricht. Dies soll auch so sein. Für die Kochgefäßsymbole 23a und 23b kann vorteilhaft vorgesehen sein, dass sie mit einer Größe dargestellt werden, mit der die Steuereinrichtung 16 sie mithilfe der Induktionsheizspulen 15 und möglicherweise weiterer vorgesehener Kochgefäßerkennung erkannt hat. Da dies für den Behälter B bzw. sein Behältersymbol 28 nicht gelten kann, wird dieses auch einfach bzw. immer im Fall einer erkannten Gewichtsbelastung oder Gewichtsveränderung, also ohne beheizbares Kochgefäß, mit einem anderen bzw. rechteckigen Symbol dargestellt, vorteilhaft immer mit derselben Größe und Ausrichtung.

Innerhalb des vorderen linken Kochgefäßsymbols 23a für das Kochgefäß Ka ist mit einer großen Ziffer eine Leistungsstufe 24a dargestellt, hier als Leistungsstufe 4. Ebenfalls innerhalb des Kochgefäßsymbols 23a, unterhalb der Leistungsstufe 24a und mit deutlich kleineren Ziffern, ist eine Gewichtsangabe 26a dargestellt, hier als "1.750", was ein gemessenes Gewicht von 1.750 g bedeutet. Die Maßeinheit "g" kann angezeigt werden, muss aber nicht. Diese Art der Anzeige verdeutlicht, welche Information wichtiger ist, nämlich diejenige der Leistungsstufe. Gleichzeitig kann auch die kleinere Gewichtsangabe 26a noch sehr gut erkannt werden.

Beim hinteren Kochgefäß Kb ist ebenfalls eine Leistungsstufe 24b dargestellt, hier als Leistungsstufe 7. Unterhalb davon ist mit kleineren Ziffern eine Gewichtsangabe 26b dargestellt, hier als "1.925". Das zweite Kochgefäß Kb ist also etwas schwerer als das erste Kochgefäß Ka trotz derselben Größe. Vermutet werden kann, dass dies an einem schweren Inhalt liegt, möglicherweise auch daran, dass ein Kochgefäßdeckel aufgelegt worden ist.

Rechts im vorderen Bereich ist mittels eines Behältersymbols 28 dargestellt, dass hier mittels der Wiegeeinrichtung bzw. der Gewichtssensoren 13 eine Gewichtsbelastung bzw. eine Gewichtsveränderung festgestellt worden ist, sie aber nicht näher spezifiziert werden kann. Sie ist nicht induktiv beheizbar und auch nicht induktiv erfassbar. Deswegen wird sie mit einem Behältersymbol 28 dargestellt, welches hier rechteckig gewählt ist. Das Kochfeld 11 kann immer dasselbe Behältersymbol 28 verwenden, also bzgl. Größe und Form, was eine Bedienung für eine Bedienperson vereinfacht. Innerhalb des Behältersymbols 28 wird eine Gewichtsangabe 29 dargestellt, hier mit "2.250". Daraus kann eine Bedienperson ersehen, dass dort der Behälter B mit einem Gewicht von 2.250 g aufgestellt ist auf der Kochfeldplatte 12 entsprechend Fig. 1, wo dies ja auch zu sehen ist.

Für ein Bedienverfahren kann vorgesehen sein, dass jegliche Gewichtsveränderung am Anzeigedisplay 19 zumindest mittels der Symbole 23 und/oder 28 dargestellt wird. Es kann aber auch vorgesehen sein, dass nur dann Kochgefäßsymbole 23 automatisch angezeigt werden, vorteilhaft samt Gewichtsangabe, wenn sie eindeutig erfasst sind und induktiv beheizbar sind. Um nun beispielsweise einen Behälter B zu wiegen, kann entweder zuerst das Wiege-Bedienelement 21e betätigt werden und dann der Behälter B auf die Kochfeldplatte 12 aufgestellt werden, vorteilhaft im Heizbereich 14, wo genügend Platz ist. Dann weiß das Kochgefäß, dass eine Gewichtsveränderung für ein Wiegen kommt und kann diese dann genauer lokalisieren, mit einem Behältersymbol 28 anzeigen bzw. darstellen und das erkannte bzw. gemessene Gewicht als Gewichtsangabe 29 innerhalb des Behältersymbols 28 anzeigen. Dies zeigt ja auch die Fig. 2 als Ergebnis. Alternativ kann die Steuereinrichtung 16 erkennen, wenn eine signifikante Gewichtsveränderung auf der Kochfeldplatte stattgefunden hat, und dies nicht an dem Ort erfolgt ist, an dem die bereits erkannten Kochgefäße K stehen. Daraus kann der Schluss gezogen werden, dass ein neuer und nicht induktiv beheizbarer Gegenstand oder Behälter aufgestellt worden ist. Dann kann die Bedienperson initiativ durch Betätigen des Wiege-Bedienelements 21e das Messen des Gewichts einleiten, so dass am Schluss entsprechend Fig. 2 die Gewichtsangabe 29 innerhalb des Behältersymbols 28 angezeigt wird. Alternativ kann eine Bedienperson durch entsprechenden Text am Anzeigedisplay 19, gegebenenfalls zusätzlich oder alternativ durch akustische Signalisierung oder eine Sprachausgabe, gefragt werden, ob eine Messung der Gewichtsveränderung bzw. eines auf die Kochfeldplatte 12 aufgestellten Gegenstands erfolgen soll, um sie dann auch anzuzeigen. Gegebenenfalls kann eine vorgenannte Tarierfunktion von einer Berlin Person ausgewählt und dann von der Kochfeldsteuerung 16 durchgeführt werden.

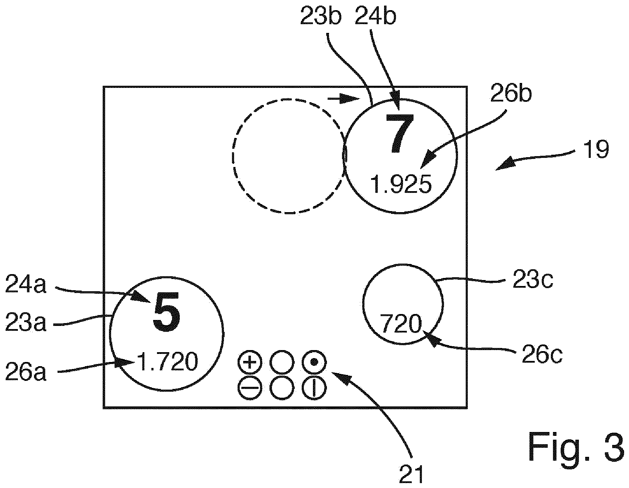

In der Fig. 3 ist dargestellt, welche Möglichkeiten der zeitlichen Veränderung bzw. der Zustandsveränderung gegeben sind. Beim Kochgefäß Ka ist die Leistungsstufe von 4 auf 5 hochgesetzt worden, wozu das Plus-Bedienelement 21a verwendet worden ist. Aufgrund dessen Beheizung ist ein Teil des Wassers in dem Kochgefäß Ka bzw. im darin befindlichen Gargut entwichen bzw. verdampft, so dass sich das Gewicht bzw. die Gewichtsbelastung von 1.750 g auf 1.720 g etwas reduziert hat. Dies wird entsprechend dargestellt an der Gewichtsangabe 26a.

Das hintere Kochgefäß Kb ist nach rechts verschoben worden. Dabei hat die Steuereinrichtung 16 dieses Verschieben erkannt und deswegen die Leistungsstufe 7 sozusagen mitgenommen, so dass sie wieder angezeigt wird. Das Gewicht ist unverändert geblieben, so dass die Gewichtsangabe 26b noch bei 1.925 g liegt. Dies konnte die Steuereinrichtung 16 als Wiegeeinrichtung zusammen mit den Gewichtssensoren 13 erfassen.

Der Behälter B ist entfernt worden, dafür ist ein kleines Kochgefäß Kc an dessen Position auf das Kochfeld 11 gemäß Fig. 1 aufgestellt worden. Dieses ist induktiv beheizbar, somit wird es erkannt und das Kochgefäßsymbol 23c ist entsprechend rund. Eine Leistung, mit der dieses Kochgefäß Kc beheizt werden soll, ist noch nicht ausgewählt. Allerdings konnte seine Masse gemessen werden und wird als 720 g bzw. als Zahl "720" dargestellt als Gewichtsangabe 26c. Diese Gewichtsangabe 26c ist vorteilhaft mit Ziffern in derselben Größe wie die Gewichtsangaben 26a und 26b gehalten. Sollte der Platz innerhalb des Kochgefäßsymbols 23c nicht ausreichend sein, so kann zur Not auch eine Anzeige bzw. Darstellung mit kleineren Ziffern erfolgen. Eine Einstellung einer Leistungsstufe für das Kochgefäß Kc, dargestellt durch das Kochgefäßsymbol 23c, kann auf vorgenannte Art und Weise erfolgen.

Im Fall eines Erkennens eines Behälters B, der nicht induktiv beheizt werden kann, also kein sinnvoll nutzbares Kochgefäß sein kann, kann am Anzeigedisplay 19 eine zusätzliche Signalisierung erfolgen. Beispielsweise kann das Behältersymbol 28 gemäß Fig. 2 blinken oder in einer anderen Farbe oder mit anderer Leuchtstärke dargestellt werden als die Kochgefäßsymbole 23a und 23b.

## Patentansprüche

1. Kochfeld (11) mit:
- einer Kochfeldplatte (12) mit Heizbereich (14) und Anzeigebereich (17),
- Heizeinrichtungen (15) im Heizbereich (14),
- einem Anzeigedisplay (19) im Anzeigebereich (17), wobei das Anzeigedisplay (19) dazu ausgebildet ist, zumindest Kochgefäßsymbole (23a, 23b) und Informationen mit Buchstaben und/oder Zahlen an beliebiger Position daran anzuzeigen,
- einer Steuereinrichtung (16),
- einer Kochgefäßerkennungseinrichtung, wobei die Kochgefäßerkennungseinrichtung dazu ausgebildet ist, ein mit den Heizeinrichtungen (15) beheizbares Kochgefäß (K) und dessen Position auf der Kochfeldplatte (12) im Heizbereich (14) zu erkennen,
- einer Wiegeeinrichtung mit Gewichtssensoren (13) am Kochfeld (11), wobei die Wiegeeinrichtung dazu ausgebildet ist, eine Gewichtsveränderung an und auf der Kochfeldplatte (12) zu erkennen und zu messen,
**dadurch gekennzeichnet, dass**
- die Steuereinrichtung (16) dazu ausgebildet ist, ein mit dem Kochfeld (11) beheizbares Kochgefäß (K) auf der Kochfeldplatte (12) im Heizbereich (14) zu erkennen und an einer der Position im Heizbereich (14) entsprechenden Position an dem Anzeigedisplay (19) anzuzeigen,
- die Wiegeeinrichtung und die Steuereinrichtung (16) dazu ausgebildet sind, eine Position der Gewichtsveränderung oder eines die Gewichtsveränderung hervorrufenden Gegenstandes (B) auf der Kochfeldplatte (12) im Heizbereich (14) zu erkennen, und eine erkannte und gemessene Gewichtsveränderung auf der Kochfeldplatte (12) an einer der Position im Heizbereich (12) entsprechenden Position als Gewichtsangabe an dem Anzeigedisplay (19) anzuzeigen,
- die Steuereinrichtung (16) dazu ausgebildet ist
o in einem ersten Fall, dass an der Position einer erkannten Gewichtsveränderung ein mit dem Kochfeld (11) beheizbares Kochgefäß (K) erkannt worden ist, an einer Position am Anzeigedisplay (19), die der Position der Gewichtsveränderung im Heizbereich (14) entspricht, ein Kochgefäßsymbol (23a, 23b) anzuzeigen und die Anzeige der Gewichtsangabe der Anzeige des Kochgefäßes (K) am Anzeigedisplay (19) räumlich zuzuordnen, insbesondere innerhalb davon oder mit Abstand von weniger 2cm daneben anzuzeigen,
o in einem zweiten Fall, dass an der Position einer erkannten Gewichtsveränderung kein mit dem Kochfeld (11) beheizbares Kochgefäß (K) erkannt worden ist, an einer Position am Anzeigedisplay (19), die der Position der Gewichtsveränderung im Heizbereich (14) entspricht, nicht ein Kochgefäßsymbol (23a, 23b) anzuzeigen, sondern nur die Gewichtsangabe anzuzeigen.

2. Kochfeld nach Anspruch 1, **dadurch gekennzeichnet, dass** die Heizeinrichtungen im Heizbereich (14) Induktionsheizeinrichtungen (15) sind, wobei vorzugsweise die Heizeinrichtungen (15) benachbart zueinander mit weniger als 3 cm Abstand dazwischen mindestens 80 % der Fläche des Heizbereichs (14) bedecken.

3. Kochfeld nach Anspruch 1 oder 2, **dadurch gekennzeichnet, dass** der Anzeigebereich (17) innerhalb derselben Kochfeldplatte (12) gebildet ist wie der Heizbereich (14) mit einer durchgehenden Fläche der Kochfeldplatte (12) über dem Heizbereich (14) und dem Anzeigebereich (17), wobei vorzugsweise unterhalb der Kochfeldplatte (12) im Anzeigebereich (17) das Anzeigedisplay (19) angeordnet ist.

4. Kochfeld nach einem der vorhergehenden Ansprüche, **dadurch gekennzeichnet, dass** das Anzeigedisplay (19) ein TFT-Anzeigedisplay ist, insbesondere ein LED-Anzeigedisplay oder ein OLED-Anzeigedisplay.

5. Kochfeld nach einem der vorhergehenden Ansprüche, **dadurch gekennzeichnet, dass** die Wiegeeinrichtung mindestens drei Gewichtssensoren (13) aufweist, die im Außenbereich der Kochfeldplatte (12) angeordnet sind, insbesondere jeder Gewichtssensor (13) in einem Eckbereich angeordnet ist, wobei vorzugsweise in vier Eckbereichen der Kochfeldplatte (12) jeweils ein Gewichtssensor (13) angeordnet ist.

6. Verfahren zum Betrieb eines Kochfelds (11) nach einem der vorhergehenden Ansprüche, **gekennzeichnet durch** die Schritte:
- in einem ersten Fall, dass an der Position einer erkannten Gewichtsveränderung ein mit dem Kochfeld (11) beheizbares Kochgefäß (K) erkannt worden ist, wird an einer Position am Anzeigedisplay (19), die der Position der Gewichtsveränderung im Heizbereich (14) entspricht, ein Kochgefäß (K) angezeigt und die Anzeige der Gewichtsangabe wird der Anzeige des Kochgefäßes (K) räumlich zugeordnet, insbesondere innerhalb davon oder mit Abstand von weniger als 2cm daneben angezeigt wird,
- in einem zweiten Fall, dass an der Position einer erkannten Gewichtsveränderung kein mit dem Kochfeld (11) beheizbares Kochgefäß (K) erkannt worden ist, wird an einer Position am Anzeigedisplay (19), die der Position der Gewichtsveränderung im Heizbereich (14) entspricht, nicht ein Kochgefäß (K) angezeigt, sondern nur die Gewichtsangabe wird angezeigt, vorzugsweise in Gramm.

7. Verfahren nach Anspruch 6, **dadurch gekennzeichnet, dass** eine Erkennung von Kochgefäßen (K) auf der Kochfeldplatte (12) oder im Heizbereich (14) in regelmäßigen zeitlichen Abständen erfolgt, vorzugsweise zeitlich durchgehend bei eingeschaltetem Kochfeld (11), insbesondere mit einem zeitlichen Abstand zwischen Erkennungen von maximal 5 sec.

8. Verfahren nach Anspruch 6 oder 7, **dadurch gekennzeichnet, dass** in dem Fall, dass einer Anzeige eines Kochgefäßes (K), insbesondere als Kochgefäßsymbol (23a, 23b), am Anzeigedisplay (19) eine Gewichtsangabe zugeordnet worden ist, diese Gewichtsangabe auch zugeordnet bleibt und angezeigt bleibt, solange das Kochgefäß (K) am Anzeigedisplay (19) angezeigt wird.

9. Verfahren nach einem der Ansprüche 6 bis 8, **dadurch gekennzeichnet, dass** bei einer Anzeige eines auf der Kochfeldplatte (12) erkannten Kochgefäßes (K) am Anzeigedisplay (19) eine für das Kochgefäß (K) gewählte Leistungsstufe der Anzeige dieses Kochgefäßes (K) am Anzeigedisplay (19) zugeordnet angezeigt wird, insbesondere innerhalb der Anzeige oder mit einem Abstand von maximal 2cm benachbart daneben angezeigt wird, wobei vorzugsweise Leistungsstufe und Gewichtsangabe gleichzeitig angezeigt werden, insbesondere die Leistungsstufe mit größerer Anzeige und/oder größeren Ziffern als die Gewichtsangabe.

10. Verfahren nach einem der Ansprüche 6 bis 9, **dadurch gekennzeichnet, dass** die Kochgefäßerkennung und/oder die Wiegeeinrichtung zusammen mit der Steuereinrichtung (16) erkennen, wenn ein Kochgefäß (K) und/oder eine Gewichtsveränderung auf der Kochfeldplatte (12) bewegt werden, wobei insbesondere auch eine neue Position des Kochgefäßes (K) oder der Gewichtsveränderung erkannt werden, wobei die jeweilige Anzeige an dem Anzeigedisplay (19) an eine dem neuen Ort entsprechende Position bewegt werden, so dass vorzugsweise eine Anzeige am Anzeigedisplay (19) den Zustand auf der Kochfeldplatte (12) stets nachgeführt wird bzw. entsprechend anzeigt.

11. Verfahren nach einem der Ansprüche 6 bis 10, **dadurch gekennzeichnet, dass** ein im Heizbereich (14) erkanntes Kochgefäß (K) durch ein rundes, insbesondere kreisförmiges, Kochgefäßsymbol (23a, 23b) angezeigt wird am Anzeigedisplay (19).

12. Verfahren nach einem der Ansprüche 6 bis 11, **dadurch gekennzeichnet, dass** an der Position einer erkannten Gewichtsveränderung ohne an derselben Position erkanntem mit dem Kochfeld (11) beheizbaren Kochgefäß (K) ein rechteckiges rahmenförmiges Symbol (28) angezeigt wird am Anzeigedisplay (19), wobei vorzugsweise die Gewichtsangabe innerhalb dieses rahmenförmigen Symbols (28) angezeigt wird.

13. Verfahren nach Anspruch 12, **dadurch gekennzeichnet, dass** in diesem Fall eine Signalisierung an eine Bedienperson erfolgt, vorzugsweise optisch und/oder akustisch, dass an dieser Position kein mit dem Kochfeld (11) beheizbares Kochgefäß (K) erkannt ist.

14. Verfahren nach einem der Ansprüche 6 bis 13, **dadurch gekennzeichnet, dass** permanent überwacht wird, ob es eine Gewichtsveränderung an der Kochfeldplatte (12) gibt, wobei eine erkannte Gewichtsveränderung einem erkannten Kochgefäß (K) anhand seiner Koordinaten zugeordnet wird, wobei dabei die Gewichtsangabe dieses Kochgefäßes (K) erhöht oder verringert wird, vorzugsweise sobald es eine Gewichtsveränderung gibt.

15. Verfahren nach einem der Ansprüche 6 bis 14, **dadurch gekennzeichnet, dass** eine Bedienperson eine Tarierfunktion ein Gefäß (B) ausgewählt hat, das kein mit dem Kochfeld (11) beheizbares Kochgefäß (K) ist, wobei die Position des Gefäßes (B) auf der Kochfeldplatte (12) erkannt worden ist, wobei in einem vorausgehenden Schritt ein Tarieren der Wiegeeinrichtung derart erfolgt, dass an dem Anzeigedisplay (19) die Gewichtsangabe auf null gesetzt wird als Tarieren, insbesondere die Gewichtsangabe "0" angezeigt wird, wobei vorzugsweise bei den anderen Kochgefäßen (K) die Anzeige der Gewichtsangabe erhalten bleibt, und wobei in einem nachfolgenden Schritt eine Gewichtsveränderung bei dem tarierten Gefäß (B) aktualisiert wird entsprechend der erkannten Gewichtsveränderung derart, dass nur die Gewichtsveränderung angezeigt wird ohne das erkannte Gewicht des Gefäßes (B) selbst.

## Claims

1. Cooktop (11) with:
- a cooktop plate (12) with a heating area (14) and a display area (17),
- heating devices (15) in the heating area (14),
- a display (19) in the display area (17), the display (19) being designed to display at least cooking vessel symbols (23a, 23b) and information with letters and/or numbers at any position thereon,
- of a control device (16),
- a cooking vessel recognition device, wherein the cooking vessel recognition device is designed to recognize a cooking vessel (K) that can be heated with the heating devices (15) and its position on the cooktop plate (12) in the heating area (14),
- a weighing device with weight sensors (13) on the cooktop (11), the weighing device being designed to detect and measure a change in weight on and at the cooktop plate (12),
**characterized in that**
- the control device (16) is designed to detect a cooking vessel (K), which can be heated with the cooktop (11), on the cooktop plate (12) in the heating area (14) and to indicate it on the display (19) at a position corresponding to the position in the heating area (14),
- the weighing device and the control device (16) are designed to detect a position of the change in weight or of an object (B) causing the change in weight on the cooktop plate (12) in the heating area (14), and to display a detected and measured change in weight on the cooktop plate (12) at a position corresponding to the position in the heating area (12) as a weight indication on the display (19),
- the control device (16) is designed for:
o in a first case, that a cooking vessel (K) heatable by the cooktop (11) has been recognized at the position of a detected weight change, at a position on the display (19) corresponding to the position of the weight change in the heating area (14), a cooking vessel symbol (23a, 23b) is displayed and the display of the weight information is spatially assigned to the display of the cooking vessel (K) on the display (19), in particular within it or at a distance of less than 2 cm from it,
o in a second case, where no cooking vessel (K) heatable by the cooktop (11) has been detected at the position of a detected weight change, not to display a cooking vessel symbol (23a, 23b) at a position on the display (19) corresponding to the position of the weight change in the heating area (14), but to display only the weight indication.

2. Cooktop according to claim 1, **characterized in that** the heating devices in the heating area (14) are induction heating devices (15), the heating devices (15) preferably covering at least 80% of the area of the heating area (14) adjacent to one another with a distance of less than 3 cm between them.

3. Cooktop according to claim 1 or 2, **characterized in that** the display area (17) is formed within the same cooktop plate (12) as the heating area (14) with a continuous surface of the cooktop plate (12) above the heating area (14) and the display area (17), the display (19) preferably being arranged below the cooktop plate (12) in the display area (17).

4. Cooktop according to one of the preceding claims, **characterized in that** the display (19) is a TFT display screen, in particular an LED display screen or an OLED display screen.

5. Cooktop according to one of the preceding claims, **characterized in that** the weighing device has at least three weight sensors (13) which are arranged in the outer region of the cooktop plate (12), in particular each weight sensor (13) is arranged in a corner region, preferably one weight sensor (13) being arranged in each of four corner regions of the cooktop plate (12).

6. Method for operating a cooktop (11) according to one of the preceding claims, **characterized by** the steps
- in a first case, that at the position of a detected weight change a cooking vessel (K) heatable with the cooktop (11) has been detected, a cooking vessel (K) is displayed at a position on the display (19) which corresponds to the position of the weight change in the heating area (14), and the display of the weight indication is spatially assigned to the display of the cooking vessel (K), in particular is displayed within it or at a distance of less than 2 cm next to it,
- in a second case, if no cooking vessel (K) heatable by the cooktop (11) has been detected at the position of a detected weight change, a cooking vessel (K) is not displayed at a position on the display (19) which corresponds to the position of the weight change in the heating area (14), but only the weight indication is displayed, preferably in grams.

7. Method according to claim 6, **characterized in that** a detection of cooking vessels (K) on the cooktop plate (12) or in the heating area (14) takes place at regular intervals, preferably continuously when the cooktop (11) is switched on, in particular with a time interval between detections of at most 5 seconds.

8. Method according to claim 6 or 7, **characterized in that**, in the event that a weight indication has been assigned to a display of a cooking vessel (K), in particular as a cooking vessel symbol (23a, 23b), on the display (19), this weight indication also remains assigned and remains displayed as long as the cooking vessel (K) is displayed on the display (19).

9. Method according to one of claims 6 to 8, **characterized in that**, when a cooking vessel (K) detected on the cooktop plate (12) is displayed on the display (19), a power level selected for the cooking vessel (K) is displayed assigned to the display of this cooking vessel (K) on the display (19), in particular within the display or at a maximum distance of 2 cm next to it, with the power level and weight information preferably being displayed simultaneously, in particular the power level with a larger display and/or larger digits than the weight information.

10. Method according to one of claims 6 to 9, **characterized in that** the cooking vessel detection and/or the weighing device together with the control device (16) detect when a cooking vessel (K) and/or a change in weight is moved on the cooktop plate (12), wherein, in particular, a new position of the cooking vessel (K) or the change in weight is also recognized, wherein the respective display on the display (19) is moved to a position corresponding to the new location, so that preferably a display on the display (19) always tracks the state on the cooktop plate (12) or displays it accordingly. indicates accordingly.

11. Method according to one of claims 6 to 10, **characterized in that** a cooking vessel (K) detected in the heating area (14) is indicated on the display (19) by a round, in particular circular, cooking vessel symbol (23a, 23b).

12. Method according to one of claims 6 to 11, **characterized in that** a rectangular frame-shaped symbol (28) is displayed on the display (19) at the position of a detected weight change without a cooking vessel (K) that can be heated with the cooktop (11) being detected at the same position, the weight indication preferably being displayed within this frame-shaped symbol (28).

13. Method according to claim 12, **characterized in that** in this case a signal is given to an operator, preferably optically and/or acoustically, that no cooking vessel (K) that can be heated with the cooktop (11) is detected at this position.

14. Method according to one of claims 6 to 13, **characterized in that** it is continuously monitored whether there is a change in weight on the cooktop plate (12), a detected change in weight being assigned to a detected cooking vessel (K) on the basis of its coordinates, the weight of this cooking vessel (K) being increased or decreased, preferably as soon as there is a change in weight.

15. Method according to one of claims 6 to 14, **characterized in that** an operator has selected a taring function for a vessel (B) which is not a cooking vessel (K) which can be heated with the cooktop (11), the position of the vessel (B) on the cooktop plate (12) having been detected, the weighing device being tared in a preceding step in such a way that the weight indication on the display (19) is set to zero as taring, in particular the weight indication "0" is displayed, wherein the weight indication is preferably retained for the other cooking vessels (K), and wherein in a subsequent step a weight change in the tared vessel (B) is updated in accordance with the detected weight change in such a way that only the weight change is displayed without the detected weight of the vessel (B) itself.

## Revendications

1. Une table de cuisson (11) comprenant :
- une plaque de cuisson (12) avec une zone de chauffage (14) et une zone d'affichage (17),
- des dispositifs de chauffage (15) dans la zone de chauffage (14),
- un écran d'affichage (19) dans la zone d'affichage (17), l'écran d'affichage (19) étant conçu pour afficher au moins des symboles de récipient de cuisson (23a, 23b) et des informations avec des lettres et/ou des chiffres à n'importe quelle position sur celui-ci,
- d'un dispositif de commande (16),
- d'un dispositif de reconnaissance des récipients de cuisson, le dispositif de reconnaissance des récipients de cuisson étant conçu pour reconnaître un récipient de cuisson (K) pouvant être chauffé par les dispositifs de chauffage (15) et sa position sur la plaque de cuisson (12) dans la zone de chauffage (14),
- un dispositif de pesage avec des capteurs de poids (13) sur la table de cuisson (11), le dispositif de pesage étant conçu pour détecter et mesurer une variation de poids sur la plaque de cuisson (12),
**caractérisé en ce que**
- le dispositif de commande (16) est conçu pour reconnaître un récipient de cuisson (K) pouvant être chauffé avec la table de cuisson (11) sur la plaque de cuisson (12) dans la zone de chauffage (14) et pour l'afficher sur l'écran d'affichage (19) à une position correspondant à la position dans la zone de chauffage (14),
- le dispositif de pesage et le dispositif de commande (16) sont conçus pour détecter une position de la variation de poids ou d'un objet (B) provoquant la variation de poids sur la plaque de cuisson (12) dans la zone de chauffage (14), et pour afficher une variation de poids détectée et mesurée sur la plaque de cuisson (12) à une position correspondant à la position dans la zone de chauffage (12) en tant qu'indication de poids sur l'écran d'affichage (19),
- le dispositif de commande (16) est conçu à cet effet
o dans un premier cas, lorsqu'un récipient de cuisson (K) pouvant être chauffé avec la table de cuisson (11) a été reconnu à la position d'une modification de poids détectée, à une position sur l'écran d'affichage (19) qui correspond à la position de la modification de poids dans la zone de chauffage (14), d'afficher un symbole de récipient de cuisson (23a, 23b) et d'associer spatialement l'affichage de l'indication de poids à l'affichage du récipient de cuisson (K) sur l'écran d'affichage (19), en particulier à l'intérieur de celui-ci ou à moins de 2 cm de celui-ci,
o dans un deuxième cas, lorsqu'aucun récipient de cuisson (K) pouvant être chauffé par la table de cuisson (11) n'a été détecté à la position d'une variation de poids détectée, de ne pas afficher un symbole de récipient de cuisson (23a, 23b) à une position sur l'écran d'affichage (19) qui correspond à la position de la variation de poids dans la zone de chauffage (14), mais d'afficher uniquement l'indication de poids.

2. Table de cuisson selon la revendication 1, **caractérisée en ce que** les dispositifs de chauffage dans la zone de chauffage (14) sont des dispositifs de chauffage par induction (15), de préférence les dispositifs de chauffage (15) adjacents les uns aux autres avec moins de 3 cm de distance entre eux couvrent au moins 80 % de la surface de la zone de chauffage (14).

3. Table de cuisson selon la revendication 1 ou 2, **caractérisée en ce que** la zone d'affichage (17) est formée à l'intérieur de la même plaque de cuisson (12) que la zone de chauffage (14), avec une surface continue de la plaque de cuisson (12) au-dessus de la zone de chauffage (14) et de la zone d'affichage (17), l'écran d'affichage (19) étant de préférence disposé au-dessous de la plaque de cuisson (12) dans la zone d'affichage (17).

4. Table de cuisson selon l'une des revendications précédentes, **caractérisée en ce que** l'écran d'affichage (19) est un écran d'affichage TFT, en particulier un écran d'affichage LED ou un écran d'affichage OLED.

5. Table de cuisson selon l'une des revendications précédentes, **caractérisée en ce que** le dispositif de pesée comporte au moins trois capteurs de poids (13) disposés dans la zone extérieure de la plaque de cuisson (12), en particulier chaque capteur de poids (13) est disposé dans une zone d'angle, un capteur de poids (13) étant de préférence disposé dans quatre zones d'angle de la plaque de cuisson (12).

6. Procédé de fonctionnement d'une table de cuisson (11) selon l'une des revendications précédentes, **caractérisé par** les étapes suivantes :
- dans un premier cas, lorsqu'un récipient de cuisson (K) pouvant être chauffé par la table de cuisson (11) a été détecté à la position d'une variation de poids détectée, un récipient de cuisson (K) est affiché à une position sur l'écran d'affichage (19) qui correspond à la position de la variation de poids dans la zone de chauffage (14), et l'affichage de l'indication de poids est associé spatialement à l'affichage du récipient de cuisson (K), en particulier à l'intérieur de celui-ci ou à une distance de moins de 2 cm à côté de celui-ci,
- dans un deuxième cas, si aucun récipient de cuisson (K) pouvant être chauffé par la table de cuisson (11) n'a été détecté à la position d'une variation de poids détectée, aucun récipient de cuisson (K) n'est affiché à une position sur l'écran d'affichage (19) qui correspond à la position de la variation de poids dans la zone de chauffage (14), mais seule l'indication de poids est affichée, de préférence en grammes.

7. Procédé selon la revendication 6, **caractérisé en ce qu'**une détection de récipients de cuisson (K) sur la plaque de cuisson (12) ou dans la zone de chauffage (14) est effectuée à intervalles de temps réguliers, de préférence de manière continue dans le temps lorsque la table de cuisson (11) est allumée, en particulier avec un intervalle de temps entre les détections de 5 secondes maximum.

8. Procédé selon la revendication 6 ou 7, **caractérisé en ce que**, dans le cas où une indication de poids a été attribuée à un affichage d'un récipient de cuisson (K), en particulier comme symbole de récipient de cuisson (23a, 23b), sur l'écran d'affichage (19), cette indication de poids reste également attribuée et affichée tant que le récipient de cuisson (K) est affiché sur l'écran d'affichage (19).

9. Procédé selon l'une des revendications 6 à 8, **caractérisé en ce que**, lorsqu'un récipient de cuisson (K) reconnu sur la plaque de cuisson (12) est affiché sur l'écran d'affichage (19), un niveau de puissance choisi pour le récipient de cuisson (K) est affiché en étant associé à l'affichage de ce récipient de cuisson (K) sur l'écran d'affichage (19), en particulier à l'intérieur de l'affichage ou à côté de celui-ci à une distance maximale de 2 cm, le niveau de puissance et l'indication de poids étant de préférence affichés simultanément, en particulier le niveau de puissance avec un affichage plus grand et/ou des chiffres plus grands que l'indication de poids.

10. Procédé selon l'une des revendications 6 à 9, **caractérisé en ce que** le dispositif de reconnaissance du récipient de cuisson et/ou le dispositif de pesée détectent, conjointement avec le dispositif de commande (16), lorsqu'un récipient de cuisson (K) et/ou un changement de poids sont déplacés sur la plaque de cuisson (12), Une nouvelle position du récipient de cuisson (K) ou de la modification de poids étant notamment aussi reconnue, l'affichage respectif sur l'écran d'affichage (19) étant déplacé à une position correspondant au nouvel emplacement, de sorte que de préférence un affichage sur l'écran d'affichage (19) suit toujours l'état sur la plaque de cuisson (12) ou l'indique. de manière correspondante.

11. Procédé selon l'une des revendications 6 à 10, **caractérisé en ce qu'**un récipient de cuisson (K) détecté dans la zone de chauffage (14) est indiqué sur l'écran d'affichage (19) par un symbole de récipient de cuisson rond (23a, 23b), en particulier de forme circulaire.

12. Procédé selon l'une des revendications 6 à 11, **caractérisé en ce qu'**un symbole rectangulaire en forme de cadre (28) est affiché sur l'écran d'affichage (19) à la position d'une variation de poids détectée sans récipient de cuisson (K) pouvant être chauffé par la table de cuisson (11) détectée à la même position, l'indication de poids étant de préférence affichée à l'intérieur de ce symbole en forme de cadre (28).

13. Procédé selon la revendication 12, **caractérisé en ce que**, dans ce cas, un signal est envoyé à un opérateur, de préférence de manière optique et/ou acoustique, pour lui indiquer qu'aucun récipient de cuisson (K) pouvant être chauffé par la table de cuisson (11) n'est détecté à cette position.

14. Procédé selon l'une des revendications 6 à 13, **caractérisé en ce que** l'on surveille en permanence s'il y a une variation de poids sur la plaque de cuisson (12), une variation de poids détectée étant associée à un récipient de cuisson (K) détecté à l'aide de ses coordonnées, l'indication de poids de ce récipient de cuisson (K) étant alors augmentée ou diminuée, de préférence dès qu'il y a une variation de poids.

15. Procédé selon l'une des revendications 6 à 14, **caractérisé en ce qu'**un opérateur a sélectionné une fonction de tarage d'un récipient (B) qui n'est pas un récipient de cuisson (K) pouvant être chauffé par la table de cuisson (11), la position du récipient (B) sur la plaque de cuisson (12) ayant été détectée, un tarage du dispositif de pesage étant effectué dans une étape préalable de telle sorte que sur l'écran d'affichage (19), l'indication de poids est mise à zéro comme tarage, en particulier l'indication de poids "0" est affichée, l'affichage de l'indication de poids étant de préférence maintenu pour les autres récipients de cuisson (K), et dans une étape suivante, une modification de poids est actualisée pour le récipient taré (B) en fonction de la modification de poids détectée, de sorte que seule la modification de poids est affichée sans le poids détecté du récipient (B) lui-même.
